# EUROPÄISCHE PATENTANMELDUNG

(11) **EP 1 004 805 A2**
(43) Veröffentlichungstag der Anmeldung: **31.05.2000**
(21) Anmeldenummer: 99122855.2
(22) Anmeldetag: 17.11.1999
(51) Int. Cl.: F16L 21/08, F16L 37/092, F16L 47/06

(54) **Steckkupplung**

(30) Priorität: 24.11.1998 DE 19854148
(71) Anmelder: Friatec Aktiengesellschaft, 68229 Mannheim (DE)
(72) Erfinder: Schmitz, Konrad Georg, 69126 Heidelberg (DE)
(74) Vertreter: Schmitt, Meinrad, Dipl.-Ing.

(57) **Zusammenfassung**

Eine Steckkupplung enthält einen Muffenkörper (2) mit einer Halteeinrichtung (26, 28) für ein in den Muffenkörper (2) einschiebbares Rohr (8, 10), wobei der Muffenkörper (2) eine das Rohrende zumindest teilweise umgebende Haube enthalten kann. Die Steckkupplung soll dahingehend weitergebildet werden, daß mit geringem Aufwand und hoher Sicherheit die Verbindung mit wenigstens einem Rohrende durchführbar und das vollständige Einschieben des Rohrendes überprüfbar ist. Es wird vorgeschlagen, daß der Muffenkörper (2) und / oder dessen Haube zumindest teilweise transparent ausgebildet ist oder transparente Bereiche (34, 36) oder wenigstens ein Sichtfenster derart enthält, daß die Position des in den Muffenkörper (2) eingeschobenen Rohrendes (18, 20) außerhalb des Muffenkörpers (2) sichtbar ist.

## Beschreibung

Die Erfindung bezieht sich auf eine Steckkupplung gemäß den im Oberbegriff des Patentanspruchs 1 angegebenen Merkmalen.

Aus der europäischen Patentanmeldung EP 587 131 A1 ist eine derartige Steckkupplung mit einem Muffenkörper und einer Halteeinrichtung oder Klemmvorrichtung für das Rohr bekannt. Diese Steckkupplung ist als Doppelmuffe ausgebildet und ermöglicht die Verbindung von zwei Rohrenden. Die Halteeinrichtung enthält einen Klemmring, welcher außen einen Klemmkonus und innen zumindest eine Klemmrippe aufweist, welche mit dem jeweiligen Rohrende in Eingriff bringbar ist. Mittels einer auf den Muffenkörper aufschraubbaren Überwurfmutter ist ein Gegenkonus mit dem genannten Klemmring verspannbar. Ferner ist innerhalb der Kupplungsmuffe ein Dichtring angeordnet, welcher nach dem Einschieben des Rohrendes an dessen Außenfläche dichtend anliegt. Bei der Herstellung der Verbindung ist darauf zu achten, daß das Rohrende weit genug in den Muffenkörper eingeführt wird, damit der Klemmring und ebenso der Dichtring ihre Funktionen erfüllen können. Es besteht die Gefahr, daß infolge eines unvollständigen Einschiebens des Rohrendes in die Steckkupplung die Verbindung nicht oder nur fehlerhaft hergestellt wird.

Vor allem bei Druckleitungen besteht darüber hinaus das Problem, daß infolge von Relativbewegungen des Rohrendes bezüglich der Steckkupplung das Rohrende aus der Steckkupplung teilweise derart herausbewegt werden kann, daß die geforderte Dichtigkeit nicht mehr gewährleistet weden kann.

Ferner ist aus dem US-Patent 5 593 186 eine Steckkupplung bekannt, deren Muffenkörper zweiteilig ausgebildet ist, wobei eine Kappe oder Haube mittels eines Gewindes mit einem Grundkörper verbunden ist. Das in diese Steckkupplung eingeschobene Rohrende ist im Bereich seiner axialen Stirnfläche radial außen von der genannten Haube oder Kappe umgeben. Die Steckkupplung enthält ferner einen zylindrischen Körper, auf welchen teilweise das Rohrende radial außen aufgeschoben ist. Der zylindrische Körper dient zur inneren radialen Abstützung des Rohrendes, eines Klemmrings und eines Dichtelements.

Hiervon ausgehend liegt der Erfindung die Aufgabe zugrunde, die Steckkupplung der genannten Art dahingehend weiterzubilden, daß mit geringem Aufwand und hoher Sicherheit die Verbindung mit dem wenigstens einen Rohrende durchführbar und das vollständige Einschieben des Rohrendes überprüfbar ist. Die Steckkupplung soll eine funktionsgerechte Handhabung bei der Montage ermöglichen und die Gefahr von Montagefehlern ausschließen, wobei die Montage mit geringem Kraftaufwand und ohne Zusatzwerkzeug erfolgen soll. Ferner soll die Steckkupplung mit geringem Fertigungsaufwand herstellbar sein und es soll gewährleistet werden, daß bei der Herstellung der Verbindung mit dem Rohrende funktionswesentliche Teile, wie insbesondere die Dichtung, ein Klemmring oder dergleichen, ordnungsgemäß zum Einsatz gelangen. Ferner soll nach der Montage die Überprüfung des ordnungsgemäß und vollständig in die Steckkupplung eingeschobenen Rohrendes jederzeit problemlos möglich sein.

Die Lösung dieser Aufgabe erfolgt gemäß den Merkmalen des Patentanspruchs 1.

Die erfindungsgemäße Steckkupplung zeichnet sich durch eine funktionssichere Konstruktion aus und gewährleistet eine problemlose Sichtkontrolle der ordnungsgemäßen Einschubtiefe des Rohrendes. Der Muffenkörper ist zumindest teilweise in dem Bereich transparent ausgebildet bzw. mit einem Sichtfenster versehen, in welchem Bereich das eingeschobene Rohrende, insbesondere dessen axiale Stirnfläche, nach dem korrekten, vollständigen Einschieben in den Muffenkörper liegen muß. Es ist so ein Einsteckindikator oder eine optische Anzeige geschaffen, um sowohl bei der Montage als auch später zu Kontrollzwecken den korrekten Einschub des Rohrendes und insbesondere die axiale Position der axialen Stirnfläche des Rohrendes überprüfen zu können. Es sei ausdrücklich festgehalten, daß bei Ausbildung der Steckkupplung mit einer Kappe oder Haube diese im Rahmen der Erfindung zumindest teilweise transparent ausgebildet sind bzw. ein Sichtfenster enthält. Der Muffenkörper enthält innen am Muffengrund einen Anschlag, an welchem das Rohrende nach vollständigem Einschub zur Anlage gelangt, und der Muffenkörper ist zumindest in dem zum freien Muffenende an den Anschlag anschließenden Bereich transparent bzw. durchsichtig derart ausgebildet bzw. wenigstens ein Sichtfenster vorgesehen, daß das eingeschobene Rohrende von außen sichtbar ist. Erfindungsgemäß kann der Muffenkörper komplett transparent ausgebildet sein. Der transparente bzw. durchsichtige Bereich, der nachfolgend auch als Sichtfenster bezeichnet wird, des insbesondere aus Kunststoff bestehenden und/oder in einem Spritzverfahren gefertigten Muffenkörpers ist in den Muffenkörper integriert. Insbesondere bei Ausbildung der Steckkupplung mit einer Kappe oder Haube kann das wenigstens eine Sichtfenster erfindungsgemäß auch als eine radiale Ausnehmung oder Durchbrechung ausgebildet sein, in deren Bereich radial innen das eingeschobene Rohrende und / oder dessen axiale Stirnfläche sich befindet. Auch der transparente Bereich besteht bevorzugt aus Kunststoff und ist in einem Spritzverfahren gefertigt, insbesondere gemeinsam mit dem Muffenkörper, so daß eine dichte integrale Einheit vorliegt.

Bevorzugt ist das Sichtfenster ringförmig ausgebildet und das ordnungsgemäß eingeschobene Rohrende ist somit rundum sichtbar. So ist nicht nur bei der Montage, sondern auch danach jederzeit eine leichte Kontrolle der funktionsgerechten Verbindung des Rohrendes mit der Steckkupplung leicht zu kontrollieren. Die Steckkupplung kann als Doppelmuffe zur Verbindung von zwei Rohren ebenso ausgebildet sein wie als Einzelmuffe eines Fittings, einer Armatur, eines Formteils oder dergleichen, um eine Steckverbindung mit nur einem Rohrende herzustellen. So kann die Steckkupplung auch als Übergangsstück zwischen einem Kunststoffrohr und einem Metallrohr ausgebildet sein. Die Steckkupplung ist insbesondere für Kunststoff-Druckrohre, beispielsweise aus PVC-C, PVC-U, PB, PEHD, PP, PVDF, ABS oder Verbundrohre mit einer Metallschicht ausgebildet, doch ist sie gleichermaßen für den drucklosen Einsatz, wie beispielsweise für Abwässer, geeignet.

Weiterbildungen und besondere Ausgestaltungen der Erfindung sind in den Unteransprüchen sowie der weiteren Beschreibung angegeben.

Die Erfindung wird nachfolgend anhand des in der Zeichnung dargestellten besonderen Ausführungsbeispiels näher erläutert, ohne daß insoweit eine Beschränkung erfolgt. Es zeigen:
- Fig. 1: einen axialen Längsschnitt durch die Steckkupplung,
- Fig. 2: eine Ansicht der Steckkupplung.

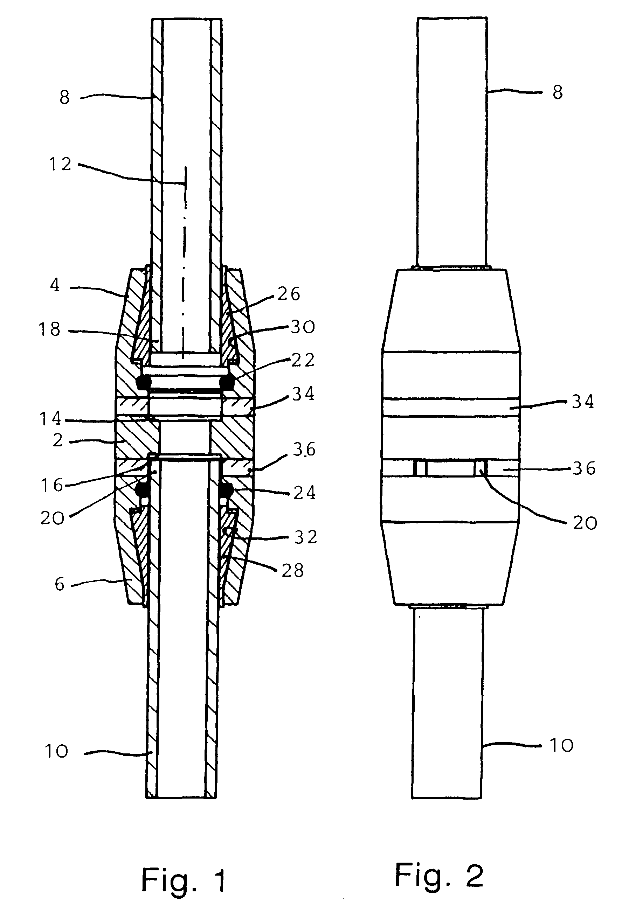

Fig. 1 zeigt die Steckkupplung mit einem als Doppelmuffe ausgebildeten Muffenkörper 2. Der Muffenkörper 2 enthält zwei übereinstimmend ausgebildete Teile 4, 6, wobei in den gemäß Zeichnung oberen Muffenteil 4 ein erstes Rohr 8 teilweise und in den anderen gemäß Zeichnung unteren Muffenteil 6 ein zweites Rohr 10 vollständig eingeschoben ist. Die zur Längsachse 12 koaxialen Muffenteile 4, 6 enthalten jeweils im Muffengrund einen Anschlag 14, 16 für das jeweilige Rohr. Das Rohrende 18 des noch nicht vollständig eingeschobenen ersten Rohres 8 weist zum Muffengrund 14 noch einen Abstand auf, während das Rohrende 20 des zweiten Rohres 10 zumindest näherungsweise am Anschlag 16 anliegt. Die Muffenteile 4, 6 enthalten innen jeweils einen Dichtring 22, 24, wobei der Dichtring 24 an der Außenfläche des vollständig eingeschobenen zweiten Rohres 10 dicht anliegt.

Des weiteren enthalten die Muffenteile 4, 6 innen jeweils eine Halteeinrichtung 26, 28, welche hier nur schematisch dargestellt ist und insbesondere einen Klemmring aufweist. Der Muffenkörper bzw. die beiden Muffenteile 4, 6 besitzen zum freien Ende konisch zulaufende Innenflächen 30, 32, welchen die entsprechend konisch ausgebildeten Außenflächen der Klemmkörper 26, 28 zugeordnet sind. Die Innenflächen der Klemmkörper 26, 28 weisen in zweckmäßiger Weise hier nicht weiter dargestellte Krallen oder dergleichen auf, welche eine feste Verbindung mit der Außenfläche der eingeschobenen Rohre ermöglichen und eine funktionssichere axiale Festlegung der Rohre 8, 10 bezüglich des Muffenkörpers 2 gewährleisten. Die Klemmkörper 26, 28 enthalten beispielsweise wenigstens einen axialen Schlitz, damit über die genannten konischen Flächen und eine konische Klemmung Radialkraftkomponenten zur axialen Festlegung der Rohre vorgebbar sind. Es sei an dieser Stelle festgehalten, daß anstelle der hier nur im Prinzip erläuterten Halteeinrichtungen die erfindungsgemäße Steckkupplung auch andere Systeme zur axialen Festlegung und Sicherung der Rohre enthalten kann.

Der Muffenkörper 2 bzw. die Muffenteile 4, 6 enthalten jeweils transparente Bereiche 34, 36, welche als Sichtfenster ausgebildet sind und durch welche hindurch ggf. das vollständig eingeschobene Rohrende sichtbar ist. Wie in Verbindung mit Fig. 2 ersichtlich, ist das Rohrende 20 des vollständig bis zum Anschlag 16 eingeschobenen Rohres 10 durch den transparenten Bereich 36 gut zu erkennen, während das Rohrende des anderen nur teilweise eingeschobenen Rohres 8 nicht sichtbar ist. Der Muffenkörper 2 und die transparenten Bereiche 34, 36 sind bevorzugt in einem Kunststoffspritzgußverfahren gemeinsam gefertigt und bilden eine integrale Einheit. Die transparenten Bereiche 34, 36 sind als geschlossene Ringe koaxial zur Längsachse 12 angeordnet, so daß unabhängig von der Betrachtungsposition das ordnungsgemäß eingeschobene Rohrende 20 gut sichtbar ist. Erscheint hingegen das Rohrende des Rohres 8 nicht im transparenten Bereich bzw. Sichtfenster, so wird dem Monteur oder Betrachter signalisiert, daß die Montage oder Verbindung nicht komplett ausgeführt ist. Auch nach der Montage wird durch die erfindungsgemäße optische Anzeige jederzeit eindeutig eine mögliche Fehlfunktion signalisiert, wenn das Rohrende im transparenten Bereich 34 nicht mehr sichtbar ist.

Es sei ausdrücklich festgehalten, daß alternativ zum erläuterten Ausführungsbeispiel im Rahmen der Erfindung der gesamte Muffenkörper bzw. die Kappe oder Haube aus transparentem Material, insbesondere aus transparentem Kunststoff, bestehen kann.

Des weiteren können die außerhalb des Bereiches für die Sichtkontrolle des eingeschobenen Rohrendes bzw. dessen axiale Stirnfläche liegenden Teilbereiche des Muffenkörpers bzw. der Kappe oder Haube mit einer nicht durchsichtigen Schicht oder Beschichtung versehen sein. Ferner sei festgehalten, daß bei Ausbildung des Sichtfensters als wenigstens eine radiale Durchbrechung diese sich außerhalb des vom Medium durchströmbaren und insbesondere mittels des Dichtelements abgedichteten Teiles befindet.

### Bezugszeichen

- 2: Muffenkörper
- 4, 6: Muffenteil
- 8: erstes Rohr
- 10: zweites Rohr
- 12: Längsachse
- 14, 16: Anschlag
- 18: Rohrende von 8
- 20: Rohrende von 10
- 22, 24: Dichtring
- 26, 28: Halteeinrichtung / Klemmkörper
- 30, 32: Innenfläche von 2
- 34, 36: transparenter Bereich / Sichtfenster

## Patentansprüche

1. Steckkupplung mit einem Muffenkörper (2) und einer Halteeinrichtung (26, 28) für ein in den Muffenkörper (2) einschiebbares Rohr (8, 10), wobei der Muffenkörper (2) eine das Rohrende zumindest teilweise umgebende Haube enthalten kann,
dadurch gekennzeichnet, daß der Muffenkörper (2) und / oder dessen Haube zumindest teilweise transparent ausgebildet ist oder transparente Bereiche (34, 36) oder wenigstens ein Sichtfenster derart enthält, daß die Position des in den Muffenkörper (2) eingeschobenen Rohrendes (18, 20) außerhalb des Muffenkörpers (2) sichtbar ist.

2. Steckkupplung nach Anspruch 1, dadurch gekennzeichnet, daß der transparente Bereich (34, 36) im Bereich des Muffengrundes und / oder eines Anschlags (14, 16) angeordnet ist, an welchem sich das vollständig in den Muffenkörper (2) eingeschobene Rohrende (18, 20) befindet, und/oder mit dem Muffenkörper (2) eine integrale Einheit bildet..

3. Steckkupplung nach Anspruch 1 oder 2, dadurch gekennzeichnet, daß der transparente Bereich (34, 36) ringförmig ausgebildet ist.

4. Steckkupplung nach einem der Ansprüche 1 bis 3, dadurch gekennzeichnet, daß der Muffenkörper (2) aus Kunststoff besteht und/oder in einem Spritzverfahren hergestellt ist.

5. Steckkupplung nach einem der Ansprüche 1 bis 4, dadurch gekennzeichnet, daß der Muffenkörper (2) zumindest axial zwischen dem Dichtring (22, 24) und dem Muffengrund oder Anschlag (14, 16) transparent ausgebildet ist oder den transparenten Bereich (34, 36) enthält.

6. Steckkupplung nach einem der Ansprüche 1 bis 5, dadurch gekennzeichnet, daß der Muffenkörper (2) und der transparente Bereich (34, 36) gemeinsam gefertigt sind, wobei der transparente Bereich ebenso wie der Muffenkörper (2) bevorzugt aus Kunststoff besteht.

7. Steckkupplung nach einem der Ansprüche 1 bis 6, dadurch gekennzeichnet, daß der gesamte Muffenkörper transparent ausgebildet ist.

8. Steckkupplung nach einem der Ansprüche 1 bis 7, dadurch gekennzeichnet, daß der transparente Bereich des Muffenkörpers (2) und / oder der Haube als eine im wesentlichen radiale Durchbrechung ausgebildet ist und / oder daß diese Durchbrechung außerhalb des mittels eines Dichtelements abgedichteten Innenbereiches der Steckkupplung vorgesehen ist.
